# EUROPÄISCHE PATENTSCHRIFT

(11) **EP 0 793 566 B1**
(45) Veröffentlichungstag und Bekanntmachung des Hinweises auf die Patenterteilung: **06.05.1998**
(21) Anmeldenummer: 95936919.0
(22) Anmeldetag: 21.11.1995
(51) Int. Cl.: B29B 7/60, B01F 15/04

(54) **VORRICHTUNG ZUM DOSIERTEN ZUFÜHREN DER EINZELKOMPONENTEN VON FLÜSSIGEM MEHRKOMPONENTEN-KUNSTSTOFF AN EINEN MISCHKOPF**
DEVICE FOR THE METERED FEED OF THE INDIVIDUAL COMPONENTS OF FLUID MULTI-COMPONENT PLASTICS TO A MIXING HEAD
DISPOSITIF PERMETTANT D'ACHEMINER DE MANIERE DOSEE DES CONSTITUANTS INDIVIDUELS DE PLASTIQUE LIQUIDE A PLUSIEURS CONSTITUANTS JUSQU'A UNE TETE MELANGEUSE

(30) Priorität: 21.11.1994 CH 3497/94; 16.12.1994 CH 3810/94
(43) Veröffentlichungstag der Anmeldung: 10.09.1997
(73) Patentinhaber: Zuberbühler, Peter, 9100 Herisau (CH)
(72) Erfinder: Zuberbühler, Peter, 9100 Herisau (CH)
(74) Vertreter: Ackermann, Ernst
(86) Internationale Anmeldenummer: CH9500276
(87) Internationale Veröffentlichungsnummer: WO9615890

(56) Entgegenhaltungen:
- EP-A- 0 258 688
- DE-B- 1 141 261
- FR-A- 2 089 096
- GB-A- 1 305 630
- US-A- 3 297 306
- US-A- 4 231 723
- US-A- 4 286 732
- US-A- 4 366 918

## Beschreibung

### Technisches Gebiet

Die Erfindung betrifft eine Vorrichtung zum dosierten Zuführen der Einzelkomponenten von flüssigen Mehrkomponenten-Kunststoffen mit weniger als 100 bar, über Verbindungsleitungen an einen, mit absperrbaren Ventilen ausgebildeten Mehrkomponentenspritzkopf, mit wenigstens zwei Komponentenbhältern.

### Stand der Technik

Man unterscheidet heute für die Aufbereitung der Zwei- oder Mehrkomponenten-Spritztechnik das Niederdruck- und das Hochdrucksystem. Bei der Hochdrucktechnik werden nach der Pumpe auf der Seite der flüssigen Kunststoffe Drücke von 100 bis über 200 bar benötigt. Die Komponenten werden meistens unmittelbar bei der sogenannten statischen Vermischung zusammengeführt. Für die statische Vermischung werden in der Regel keine mechanischen Hilfen verwendet. Man nützt vor allem die Kräfte aus der Umwandlung der statischen Energie in die Geschwindigkeitsenergie aus. Hochdruckanlagen werden für Durchsätze bis zu 1000 kg Material pro Stunde eingesetzt, z.Bsp. für grosse Flächenbeschichtungen von Dächern, Isolationsplatten, oder für die teilweise automatisierte Herstellung von Massenteilen.

Die Erfindung betrifft die Gattung der Niederdrucktechnik mit statischen System-Drücken von weniger als 100 bar, insbesondere 1 - 20 bar, vorzugsweise 1 - 5 bar. Man bezeichnet die entsprechenden Anlagen auch als Kleinverguss- oder Kleinspritzanlagen. Diese erlauben die gleichen Grundstoffe zu verarbeiten, wie bei der Hochdrucktechnik. Es sind dies Elastomere, Polyurethan, Epoxy, Polyester und anderen Flüssigharzen. Die häufigsten Verarbeitungsweisen sind Giessen, Spritzen, Kleben und Schäumen. Die ganze Technik basiert auf der besonderen chemisch-physikalischen Beschaffenheit, vor allem dem schnellen Reaktionsvermögen, der Einzelkomponenten nach dem Zusammenführen. Drei Eigenschaften sind charakteristisch für die Mehrkomponenten-Kunststoffe:
- Sehr schnell, teils innert Sekunden nach dem Zusammenbringen der Komponenten beginnen diese sich zu vernetzen und hart oder zäh zu werden. Sie behalten beim Hartwerden die eingenommene Form. Dies trifft auch dann zu, wenn die Mischung nicht in die gewünschte Form gegossen wird, sondern unbeabsichtigt z.Bsp. im Mischer selbst verbleibt. Der Mischer muss nach einem solchen Unfall weggeworfen werden.
- Ein Teil der Komponenten, bei zwei Komponenten zumindest der Härter, hat ein extrem aggressives Verhalten im Hinblick auf die Wasseraufnahme aus der Luft. Die Wassermoleküle der Luft verbinden sich mit dem Härter und haben eine Kristallbildung zur Folge, die sich an allen von ihm benetzten Teilen ablagern. Diese Ablagerungen an mechanisch bewegten Teilen führt in kurzer Zeit zu Schäden an Dichtungen, Blockierungen, oder zu Verstopfungen der Kanäle. Jeder Luftkontakt der Komponenten muss deshalb bis zum Vergiessen vermieden werden.
- Mit einem periodischen Spülmitteleinsatz wird versucht, einen Teil der Störquellen so gut wie möglich zu eliminieren.

Die bei der Niederdrucktechnik verwendeten Apparate tragen diesen Sachverhalten Rechnung, indem die einzelnen Komponenten aus den jeweiligen Komponenten-Behältern über je eine eigene Pumpe über Schläuche bis nahe an den Mischer geführt werden. Kurz vor dem Mischer wird für jede Komponente durch ein Ventil, automatisch oder von Hand, die Förderung freigegeben oder gestoppt. In der Niederdrucktechnik werden kleine bzw. kleinste Teile hergestellt bzw. entsprechende Kleinflächen beschichtet. Bei der Herstellung von Einzelteilen müssen für jedes Teil die Ventile kurz für einen Schuss geöffnet und danach wieder geschlossen werden. Es hat sich nun gezeigt, dass gerade hier bei den bekannten Apparaten eine Schwachstelle liegt. Aus den weiter oben geschilderten Gründen treten zu häufig Störungen auf. Ein zweites allgemeines Problem liegt darin, dass nach jedem Produktwechsel oder nach jedem grösseren Produktionsunterbruch ein Teil oder alle, von den Komponenten berührten inneren Flächen, sauber gereinigt werden müssen. Teilweise ist dies mit entsprechenden automatischen Spüleinsätzen möglich. Die Praxis zeigt jedoch, dass je nach Anwendungsfall und den besonderen Grundkomponenten zumindest Teilbereiche schlecht oder nur mit zu grossem Aufwand gereinigt werden können, was bei mechanisch bewegten Teilen sehr nachteilig ist. Besonders gilt dies bei den Ventilen, den häufig verwendeten Zahnradpumpen und gewissen Partien im Bereich des Mischers. Obwohl die Kleinverguss- bzw. Kleinspritzanlagen für sehr viele Anwendungen z.Bsp. für die Klebetechnik, den Modellbau oder für die Kleinserien-Herstellung von Bauteilen in der Elektroindustrie geradezu prädestiniert sind, haben zu viele Störungen und ein zu grosser Aufwand für die Reinigung bisher einen breiteren Einsatz teilweise gehemmt.

Die US-PS 4 231 723 schlägt eine Tandemanordnung vor, bei der über einen Wiegehebelmechanismus gleichzeitig 4 Kolbenpumpen betätigt werden. Der Wiegehebelmechanismus wird von einem elektrischen Motor mit variabler Drehzahl angetrieben. Die Umschaltung des Motores erfolgt über elektromagnetische Schalter. Die Kolben können in Bezug auf den Wiegehebel verschoben werden. Dadurch wird die Menge reguliert. Jeder einzelne Kolbenhub entspricht einem kompleten Schuss. Die Förderung wird vollständig auf der Seite der elektromechanischen Kolben- bzw. Antriebseinheit gesteuert. Die Mischeinheit kann damit nicht über die am Mischer angeordneten Ventile gesteuert werden und eignet sich deshalb nicht als Kleinvergussanlage. Die Funktion Komponentenbehälter sowie die Funktion Dosierung mit unabhängigen Kleinst-Kolben sind getrennt.

Die DE-AS 1 141 261 zeigt eine Vorrichtung zum Mischen und Abgeben viskoser, also klebriger, zähflüssiger Substanzen. Bevorzugt werden dabei Behälter bzw. Transportbüchsen des Herstellers ohne Umfüllen verwendet. Die Büchsen werden lediglich über die feststehenden Kolben gestülpt, so dass durch Bohrungen im Kolben die Substanzen zur Mischkammer hin austreten können. Die Einzelkomponenten die bevorzugt bei Kleinvergussanlagen verwendet werden sind jedoch sehr dünnflüssige Substanzen. Man giesst z.Bsp. die Komponenten wie wenn es sich um Wasser handeln würde in eine Form. Die Härtung beginnt sofort nach der Mischung der Komponenten. Die DE-AS 1 141 261 würde sich deshalb für Kleinvergussanlagen nicht eignen, da ein Gefäss mit einer entsprechenden wässerigen Substanz nur mit grösseren Verlusten durch Verschütten umgestülpt werden könnte. Überall wo die verschütteten Komponenten zusammen treffen würden, würde die Härtung sofort beginnen.

### Darstellung der Erfindung

Der Erfindung wurde nun die Aufgabe gestellt, die Nachteile der bekannten Lösungen zu beheben, insbesondere die Rationalität insbesondere für Kleinverguss- bzw. Kleinspritzanlagen zu steigern, ohne die angewendete Technik zu komplizieren. Eine weitere Teilaufgabe lag darin, selbst sehr kleine Mengen von z.Bsp. 100 gr - 1 kg Kunststoff so zu verarbeiten, dass nur minimale Material-verluste entstehen und der Produktwechsel schnell und rationell mit wenig Reinigungsaufwand durchführbar ist.

Die neue Erfindung schlägt gemäß Anspruch 1 eine Vorrichtung zum dosierten Zuführen der Einzelkomponenten von flüssigen Mehrkomponenten-Kunststoffen vor, mit weniger als 100 bar über Verbindungsleitungen an einen mit absperrbaren Ventilen ausgebildeten Mehrkomponentenspritzkopf, mit wenigstes zwei Komponentenbehältern mit einem Fassungsvermögen von 1 bis 5 Litern, aus denen mit Intervallen eine bestimmte Menge mit sehr hoher Präzision oder über eine bestimmte Zeit eine momentan konstante Menge dosierbar ist, wobei die zwei Komponentenbehälter selbst als aufrechte Druckzylinder und zur Haltung des Druckes auch bei verschlossenen Ventilen in den Komponentenbehältern mit von unten nach oben in den Komponentenbehältern bewegbare Verdrängerkolben, und einem elektromechanischen Antriebssystem für die Verdrängerkolben als Kleinvergussanlage ausgebildet und die Förderleistung sowie das Verhältnis der zwei Komponenten über das elektromechanische Antriebssystem einstellbar sind.

Der Druckzylinder ist gleichzeitig Komponenten-Behälter und Druckraum. Ein Verdrängerkolben dient insbesondere zur Haltung des Druckes und kann durch die Steuerbarkeit je nach Anwendungsfall auch zur exakten Dosierung verwendet werden. Der Verdrängerkolben kann gleichzeitig zur Erzeugung des Druckes eingesetzt werden. Je nach den spezifischen Produkten, die verarbeitet werden, und nach Anforderung an Verguss- resp. Spritzarbeit, kann der Druck auch durch einen zweiten Kleinkolben bzw. Druckkolben erzeugt werden, der exakt koordiniert mit dem Verdrängerkolben gesteuert wird. Der zusätzliche Druckkolben kann irgendwo zwischen dem Druckzylinder und dem Mischraum, z.Bsp. auch direkt an dem Druckzylinder selbst oder auf dem Abschlussdeckel angeordnet sein. In der bisherigen Praxis bei Kleinvergussanlagen wurden sehr viele Nachteile einfach hingenommen. Insbesondere war im Stand der Technik eine oekonomische Herstellung von Kleinserien gar nicht möglich. Die neue Erfindung geht aber auch in Bezug auf die bisherigen Grossanlagen einen vollständig anderen Weg, indem die Komponentenbehälter selbst die Dosierfunktion übernehmen. Insbesondere wird der Mengen- oder Volumenausstoss aber genau so das Mischungsverhältnis von zwei Komponenten über das Antriebssystem und die Druckzylinder bestimmt. Ganz besonders bevorzugt weisen die Druckzylinder ein Fassungsvermögen von etwa 3 bis 5 Liter auf.

Der bisherige Haupteinsatz von Kleinvergussanlagen kann mit drei Tätigkeiten umschrieben werden. Es sind dies das Formengiessen sowie das Ausgiessen von Bauteilen z.Bsp. von elektrischen Bauteilen und besonders die Einzelfertigung von Teilen aus Mehrkomponentenkunststoff. Die Anforderungen sind dabei sehr vielfältig. Bei Hochdruckanlagen werden die Komponenten mehrheitlich 1:1 gemischt. Bei Kleinanlagen ist dagegen beinahe jedes beliebige Mischverhältnis gefordert, ganz besonders wenn es sich um das Ermitteln der optimalen Mischung handelt. Oft werden auch Harze mit extremen Füllstoffanteilen enigesetzt. Bei der klassischen Anwendung der Kleinvergussanlage ist jedoch kein Fülldruck Fülldruck etwa wie beim Kunststoffspritzgiessen erforderlich. Man giesst die Komponenten wie wenn es sich um Wasser handeln würde in eine Form. Die Giesszeit kann zwischen einigen Sekunden und z.Bsp. 30 Sekunden liegen. Ein bekanntes Beispiel ist das Ausgiessen von elektrisch-elektronischen Bauteilen. Es hat sich gezeigt, dass hier die Konstanz der Giessmenge pro Zeiteinheit insbesondere aber die Konstanz der Mischung das A und O ist. Für gewisse Teile möchte man eine bestimmte Menge mit sehr hoher Präzision in eine Form giessen. In einer anderen Anwendung soll über eine bestimmte Zeit eine konstante momentane Dosiermenge eingehalten werden, wobei die totale Menge von Auge, wenn die Form voll ist oder ein Gewichtssignal erreicht ist, bestimmt werden kann. In all diesen Fällen ist das dosierte Zuführen auf die eine oder andere Art entscheidend, immer aber unter Garantie der Mischqualität. Der konstante, bestimmte Druck in den Druckzylindern ist in diesen Fällen mehr eine Kontrolle bzw. eine Sicherheitsmassnahme. Über alle möglichen Betriebszustände soll die Mischqualität garantiert und beliebige Giesszyklen einstellbar sein.

Die Erfindung erlaubt eine ganze Anzahl besonders vorteilhafter Ausgestaltungen. Bevorzugt weist die Kleinvergussanlage zwei Komponentenbehälter für das gleichzeitige Dosieren auf, wobei den zwei Verdrängerkolben ein elektromechanischer Antrieb vorteilhafterweise mit einem gemeinsamen Antriebsmotor und je zwischengeschalteten Reduktionsgetrieben für die Verdrängerkolben zugeordnet wird. Bei Kleinvergussanlagen ist der Herstellpreis ein wichtiges Kriterium. Die Kosten für die ganze Anlage soll möglichst tief sein, damit die Kleinserienfertigung mit keinen grossen Grundkosten belastet werden. Es ist ohne weiteres möglich, jeden Verdrängerkolben einzeln z.Bsp. über Servomotoren anzutreiben, was aber zumindest zur Zeit den Herstellpreis erhöht. Der gemeinsame Antriebsmotor weist Mittel zur stufenlosen Drehzahleinstellung auf, wobei eines der Reduktionsgetriebe als Variatorgetriebe, und der Antriebsmotor vorzugsweise mit doppelter Abtriebswelle ausgebildet ist. Im Regelfall wird zuerst über das Variatorgetriebe das Mischungsverhältnis festgelegt und danach durch Einstellung der Drehzahl des Antriebsmotores der Gesamtausstoss bestimmt.

Ein weiterer vorteilhafter Ausgestaltungsgedanke liegt darin, dass jedem der wenigstens zwei Komponentenbehälter je ein gleicher alternierend arbeitender Druckzylinder mit umgekehrter Bewegungsrichtung der Verdrängerkolben zugeordnet ist, insbesondere zur Verwendung für eine automatisierbare Zuführung der Zylinder mit flüssigen Komponenten. Dies erlaubt, mit der selben Antriebsmechanik den einen Zylinder während der Arbeitsphase Ausstossrichtung und den je anderen in die Füllposition bzw. in die Richtung der untersten Position zu fahren. Ist der arbeitende Komponentenbehälter in der Leerposition angelangt, ist gleichzeitig der andere in der Vollposition. Je nach Ausbaugrad der Anlage kann die entsprechende Komponente direkt über den geöffneten Deckel oder aber automatisch über Verbindungsleitungen nachgefüllt werden. Besonders wenn hohe Anforderungen an die Reproduzierbarkeit, sei es in Bezug auf den Druck oder eine bestimmte Dosiermenge, gestellt werden, hat es sich als vorteilhaft erwiesen, wenn die Verdrängerkolben über Computerprogramme gesteuert werden. Steuerung für den Antrieb kann für jeden beliebigen Automatisierungsgrad Speicher- und Rechnermittel aufweisen, z.Bsp. mit Produktion nach Rezepten. Es ist ferner aber auch möglich zusätzlich den Druck der Komponenten und/oder die Ventilöffnungszeiten zu steuern bzw. zu regeln.

Da die Komponentenbehälter Kleinbehälter sind, 1 Liter bis 5 Liter Fassungsvermögen aufweisen, erlaubt die neue Lösung eine ganz besonders optimale Reinigung. Die Komponentenbehälter weisen lösbare Abschlussdeckel auf, wobei die Abschlussdeckel, die Druckzylinder und/oder die Kolben wegnehmbar ausgebildet sind, insbesondere zur Schnellreinigung aller Komponenten-Behälterteile. Ferner wird vorgeschlagen, dass die Komponentenbehälter lösbare Anschlüsse für die Verbindungsleitungen aufweisen, wobei die Verbindungsleitungen wahlweise mit den lösbaren Anschlüssen für das Zuführen der Komponenten oder mit Reinigungsanschlüssen verbindbar sind zur Reinigung der Verbindungsleitungen und des Mischkopfes mittels Luft oder flüssigen Reinigungsmitteln insbesondere bei einem Produktewechsel. Beim Mehrkomponenten-Kunststoff liegt eines der Hauptprobleme darin, dass sofort nach Kontakt der Komponenten die Reaktion beginnt. Eine neuralgische Stelle der Anlage liegt deshalb in dem Bereich des Mischkopfes, besonders der Ventile und des Mischers. Der Mischkopf hat dafür Anschlussstellen für Reinigungsmittel für die Reinigung der Komponentenventile sowie des Mehrkomponentenmischkopfes.

Für den Betrieb der Kleinvergussanlage hat sich als ganz besonders vorteilhaft erwiesen, wenn die Ventilabsperrungen mit einer eigentlichen Drucksperre ausgebildet sind. Beim Einsatz von Komponentenpumpen im Stand der Technik können diese exakt auf den Bedarf der Komponentenmenge und des Komponentendruckes gesteuert werden. Erfindungsgemäss wird nun aber der Druck in den Druckzylindern auch während kürzeren Giessunterbrüchen aufrechterhalten bzw. auf dem konstanten Niveau gehalten. Werden z.Bsp. elektronische Bauteile ausgegossen, beispielsweise mit einer Giesszeit von 5 Sekunden und einer Intervallzeit von 3 Sekunden während zwei Giessvorgängen, so kann dank der Drucksperre auch jeder Stopp- und Ausfahrvorgang mit der maximalen Mischqualität durchfahren werden.

Die Ventilstössel werden als Ventilgruppe zusammengefasst. Der Mischkopf kann statische oder dynamisch oder statisch-dynamische Mischwerkzeuge aufweisen. Bei einer sehr vorteilhaften Ausführung werden die flüssigen Mehrkomponenten innen durch den vordersten Abschnitt des Ventilstössels hindurch geführt und die verschliessbare Ventilöffnung seitlich an dem Ventilstössel angebracht, derart, dass die vorgeschobene Stellung des Ventilstössels die offene Position, und rückwärtsgeschobene Stellung die gesperrte Position ist. Auf diese Weise wird erreicht, dass am Ende eines Giessvorganges nicht nur das Nachdrücken plötzlich gestoppt wird, sondern es wird auch jegliches Nachtropfen der Komponenten verhindert. Anstelle der bisherigen zusätzlichen Verdrängerwirkung des Ventilstössels beim Schliessen der Ventile wird nun sogar eine sehr geringe Menge nach rückwärts angesogen. Es findet ein Komponentenrückzug statt. Der Wiederbeginn ist gleichermassen vorteilhaft. Bei Beginn der Öffnungsbewegung der Ventilstössel wird die entsprechende Menge verdrängt und ausgedrückt. Gemäss einem weiteren Ausgestaltungsgedanken wird die Mündungsstelle von einem Absperrventil z.Bsp. für die Komponente A gegenüber der bzw. den anderen, näher an der Eintrittsstelle der Antriebsachse des motorischen Antriebes in die Mischkammer bzw. Vormischkammer angeordnet, wobei die nächstgelegene Mündungsstelle vorzugsweise als Ringkanal um die Antriebsachse in die Mischkammer ausgebildet ist und so die Antriebsachse schützt. Die Eintrittsstelle der Antriebsache ist eine neuralgische Stelle, an der insbesondere ein Zusammentreffen z.Bsp. von Harz und Härter vermieden werden soll. Dadurch ist es möglich, für alle von flüssigen Kunststoff-Komponenten benetzten Teile des gesamten Mischerinnenraumes, der problemlosen Komponenten den Vortritt zu geben. Im Regelfall wird dies das Harz sein, das gleichzeitig die Mischkammer auf eine Art schadenfrei konserviert. Dadurch wird auch verhindert, dass die rückwärtige Lippendichtung der Mischerwelle mit der B-Komponente benetzt wird. Dadurch können entsprechende Störungen eliminiert werden. In vielen Fällen kann dadurch eine getrennte zusätzliche Spülung entfallen. Der Ventilstössel wird vorzugsweise als Nadelventil ausgebildet. Besonders bevorzugt wird die Ventilabsperrung kleinquerschnittig ausgebildet und in dem Nahbereich der Mischkammerwandung bzw. an einer Vorkammer zur Mischkammer angeordnet. Für eine langfristig gute Beweglichkeit der Ventilstössel hat es sich bewährt, wenn um die Ventilstössel, zwischen der Treiberseite und der Absperrseite, wenigstens eine Weichmacherkammer angeordnet wird, zur Aufbringung und Aufrechterhaltung eines Weichmacherfilmes auf den Ventilstössel. Der teils leimartige Effekt einer Kunststoffmischung verursacht durch das Antrocknen einer Komponente durch Luft bedingt zumindest einen minimalen Krafteingriff auf die Ventilbewegung. Je nach Ausgestaltung wird das Ventil selbst von der jeweiligen Komponente umströmt, was nicht nachteilig ist, wenn weder eine zweite Komponente noch Luft dazu tritt. Der Weichmacherfilm bzw. Oelfilm auf der vom Ventilsitz abgekehrten Seite verhindert das Ansetzen der Komponente oder Luftzutritt an der Stelle und garantiert über einen beliebig langen Zeitraum eine gute Gleitreibung, so dass entsprechende Störungen fast vollständig eliminierbar sind. Wenn ein Teil der Komponente hoch explosive Dämpfe abgibt, wird als Antriebsmittel Druckluft verwendet. Hierzu eignet sich die neue Lösung ganz besonders.

Die Erfindung betrifft ferner noch eine weitere sehr vorteilhafte Ausgestaltung der Vorrichtung zum dosierten Zuführen von flüssigen Mehrkomponenten-Kunststoffen an eine Ausgussdüse, vorzugsweise für Kleinvergussanlagen, mit Komponenten-Behältern und Verbindungsleitungen für die Einzelkomponenten und ist dadurch gekennzeichnet, dass der Mischer zur Schnellreinigung ein blattförmig ausgebildetes Mischwerkzeug aufweist und die Mischkammer gewinde- oder bajonettartig aufsetzbar und lösbar ist. In der Praxis treten immer mehr Fälle auf, bei denen nur sehr geringe Mengen verarbeitet bzw. nur eine kleine Zahl von Teilen hergestellt werden müssen. Das gilt auch bei der Ermittlung z.Bsp. einer optimalen Zusammensetzung der Komponenten. Besonders in diesen Fällen wird eine leichte und schnelle Reinigungsmöglichkeit aller benetzten Teile gewünscht. Mit den erfindungsgemäss vorgeschlagenen Lösungen ist dies optimal erreicht.

Es wird ferner vorgeschlagen, den Mischer bei Bedarf kombiniert als dynamisch-statischen Mischer auszubilden, der in einem ersten Abschnitt motorisch angetriebene Mischwerkzeuge aufweist, zur dynamischen Vormischung der Komponenten, wobei die Länge des Vormischers vorzugsweise wenigstens 10 bis 50 % des statischen Mischabschnittes beträgt. Die Mischwerkzeuge können auch hier als hochtouriges Mischblatt und formähnlich wie der erste Abschnitt der Mischkammer ausgebildet werden. Das Mischblatt selbst weist vorteilhafterweise eine Anzahl Zirkulationsöffnungen sowie einen ersten konischen und einen anschliessenden parallelen Abschnitt auf, entsprechend der Form des Mischerinnenraumes.

### Kurze Beschreibung der Erfindung

In der Folge wird die Erfindung nun an Hand einiger Ausführungsbeispiele mit weiteren Einzelheiten erläutert. Es zeigen:
- die Figur 1: schematisch eine Kleinvergussanlage des Standes der Technik;
- die Figur 2: eine erfindungsgemässe Kleinvergussanlage mit schematisch dargestellten Verbindungsschläuchen in Bereitsschaftsstellung für das Vergiessen;
- die Figur 2a: die Schlauchverbindungen gesteckt für eine Reinigung
- die Figur 3: eine Kleinvergussanlage ohne Mischkopf ähnlich Figur 2 in grösserem Massstab;
- die Figur 4: einen Schnitt durch einen Mischkopf für zwei Komponenten in grösserem Massstab;
- die Figur 5: eine Ausschnitt-Vergrösserung eines Einzelventiles der Figur 4;
- die Figur 6: eine Lösung mit je zweifachem, alternierend arbeitendem Druckzylinder;
- die Figur 6a: schematisch die wegnehmbaren Hauptteile eines Komponentenbehälters für die Reinigung;
- die Figur 7, 7a und 7b: eine besonders vorteilhafte Ausführungsform eines Mischkopfes;
- die Figur 8: zeigt einen statischen Vorsatzmischer als Stand der Technik;
- die Figur 9: einen kombinierten dynamisch/statischen Mischer;
- die Figur 10: einen dynamischen Blattmischer;
- die Figur 11: ein blattförmiges Mischwerkzeug der Figuren 9 und 10.

### Wege zur Ausführung der Erfindung

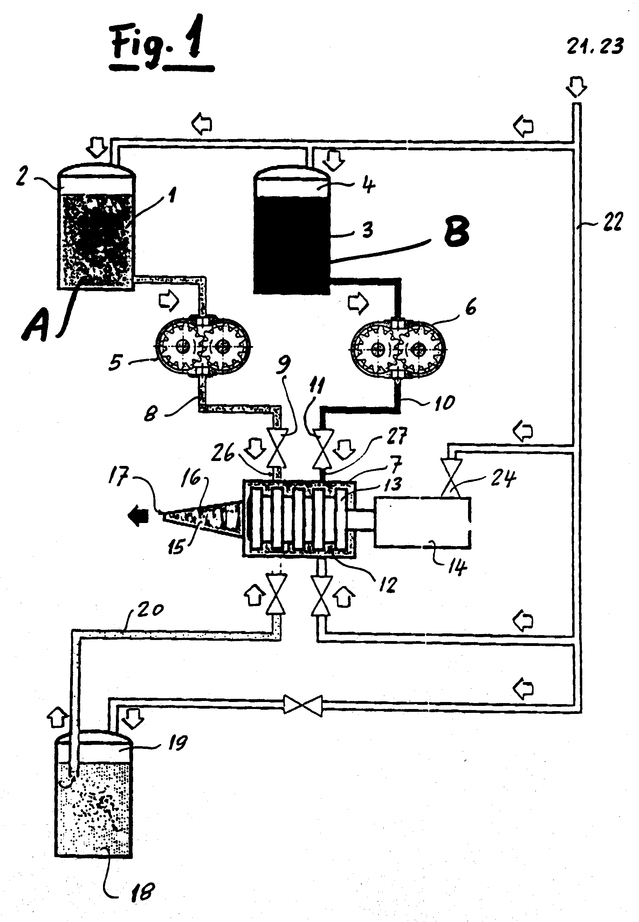

In der Folge wird nun auf die Figur 1, die den Stand der Technik darstellt, Bezug genommen. Sie zeigt das einfachste Beispiel einer 2-Komponenten-Kleinvergussanlage. Eine erste Komponente A, Harz 1 ist im Harz-Behälter 2, sowie eine zweite Komponente B, Härter 3 im Härter-Behälter 4 bereit. Über nicht dargestellte Antriebs- und Steuermittel wird das Harz 1 über eine Harzpumpe 5, sowie der Härter 3 über eine Härterpumpe 6 in dosierter Menge im richtigen Mischverhältnis einem Mischer 7 zugefördert. Vor dem Eintritt in eine Mischkammer 12 ist in beiden Zuführleitungen der Harzzuführleitungen 8 ein Absperrventil 9 sowie in der Härterzuführleitung 10 ein Absperrventil 11 angeordnet. Der Mischer 7 weist einen dynamischen Mischrotor 13 auf, der von einem Luftmotor 14 mit z.Bsp. 1000 - 5000 U/Min. angetrieben wird. Die gewünschten Komponenten bzw. das Mischgut 15 werden/wird über einen Mischkopf 16 einer Ausgussdüse 17 zugeführt. Spülmittel 18 wird aus einem Spülmittelbehälter 19 über eine Spülmittelleitung 20 nach Beendigung des Mischvorganges in die Mischkammer 12 gespritzt. Die bereits vereinigten aber noch nicht ausgehärteten Komponenten werden so aus der Mischkammer ausgetragen was die Mischkammer reinigt und ein Aushärten darin vermeidet. Mit zusätzlicher Luft wird danach die Mischkammer vollends von allen anderen Medien befreit. Die Reinigung der Komponentenkanäle war bis anhin unpraktisch oder nicht gelöst. Von einem nicht dargestellten Luftdruckerzeuger 21 wird über Luftleitungen 22 an alle Bedarfsstellen Druckluft 23 zugeführt. Mit der Druckluft 23 wird z.Bsp. auch das Spülmittel 18 zu den Reinigungsanschlüssen gefördert. Für eine klare Definition der einzelnen Betriebszustände sind an allen erforderlichen Stellen steuerbare Abschlussventile 24 angeordnet. Bereits aus der schematischen Darstellung gemäss Figur 1 ist erkennbar, dass sowohl Härterpumpe 6 und Harzpumpe 5 wie auch ein Harzmündungsstück 26 und ein Härtermündungsstück 27 vor dem Eintritt in die Mischkammer sehr schlecht reinigbar sind.

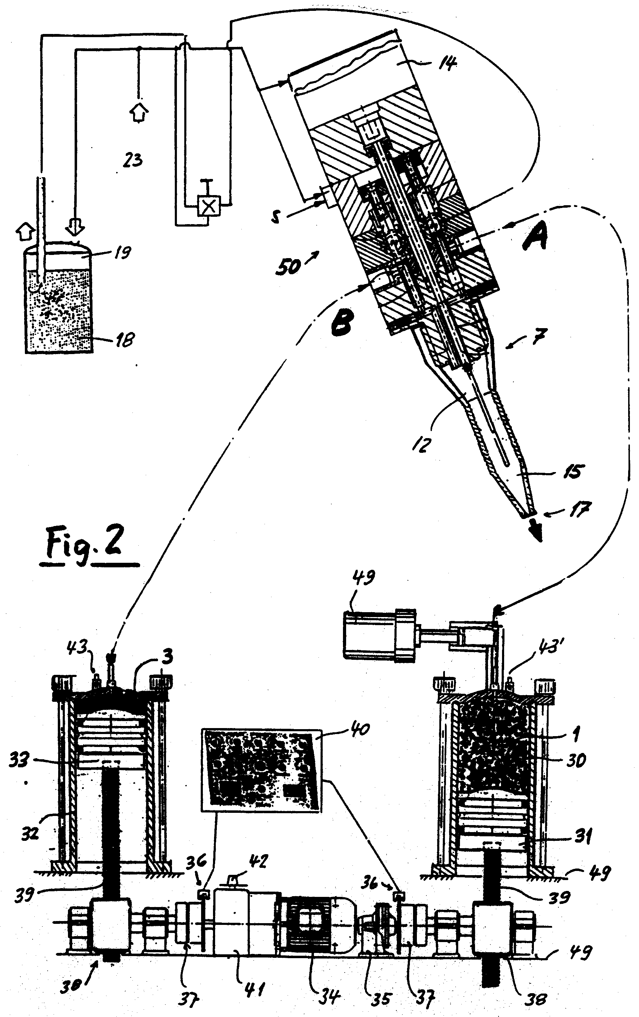

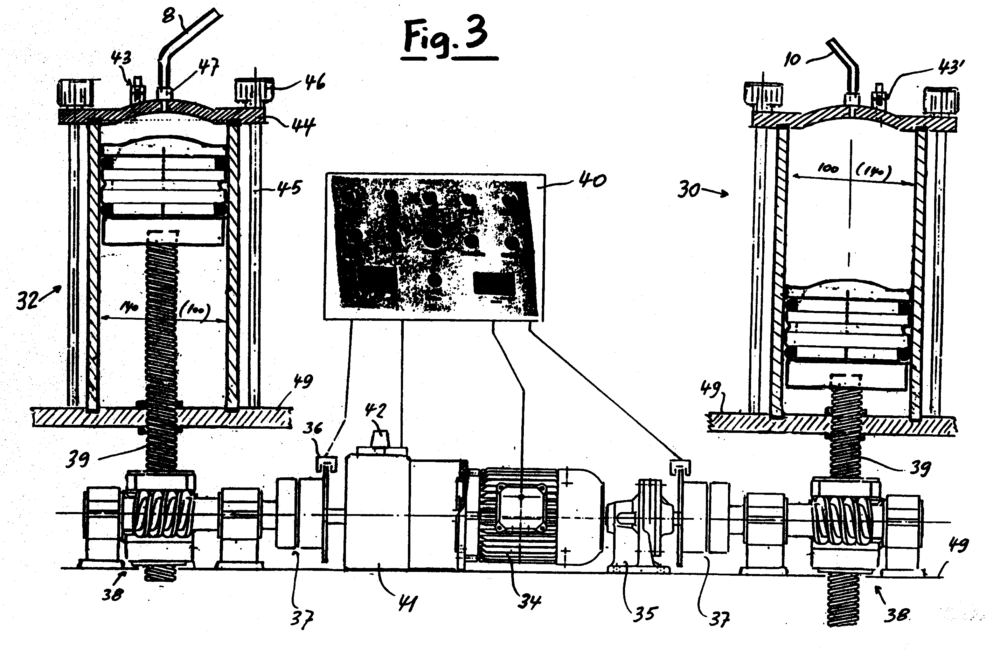

In Analogie zu der Figur 1 zeigt die Figur 2 die neue Erfindung vereinfacht dargestellt. Innerhalb des Förderweges der Kunststoff-Komponenten Harz 1 (A) und Härter 3 (B) befinden sind keine mechanisch bewegten Teile mehr. Für das Harz 1 ist ein Druckzylinder 30 vorgesehen, in dem von der unteren Seite her durch einen Kolben 31 das Harz 1 verdrängt wird. Sinngemäss wird der Härter 3 in einem Druckzylinder 32 durch einen Kolben 33 verdrängt. Die Verdrängungswirkung könnte auf einfache Art und Weise z.Bsp. auch über einen Hydraulikkolben von unten nach oben erfolgen. In den Figuren 2 und 3 ist ein elektromechanischer Antrieb für die Verdrängerkolben 31 und 33 dargestellt. Die elektromechanische Ausführung anstelle einer hydraulischen hat den ganz besonderen Vorteil, dass über eine entsprechende Steuerung eine hohe Reproduzierbarkeit erreichbar ist. Beide Verdrängerkolben haben einen gemeinsamen, stufenlos regelbaren Antriebsmotor 34 mit doppelter Antriebswelle. Auf der rechten Bildseite ist direkt ein Reduktionsgetriebe 35 und abtriebsseitig eine Lichtschranke 36 angeordnet. Nach einer Magnetkupplung 37 und anschliessendem Getriebe das als Umkehrgetriebe 38' oder als einfaches Spindelgetriebe 38 ausgebildet sein kann, wird über eine Spindel 39 der Verdrängerkolben 33 betätigt, resp. senkrecht von unten nach oben und umgekehrt bewegt. Alle Steuer- und Regelbefehle werden von einer Steuerung 40 koordiniert. Die Steuerung 40 kann vom einfachsten Aufbau bis zum höchsten Grade ganze Rezepte mit einer adaptiven Methode steuern. Auf der linken Bildseite ist die Motorwelle direkt an ein Variatorgetriebe 41 angeschlossen, dessen Drehzahl über einen, von Hand betätigbaren Drehknopf bzw. eine Regeleinrichtung 42 oder durch die entsprechenden Programme in der Steuerung 40 einstellbar ist. Die dargestellte Ausführung eignet sich besonders gut sowohl für die Mengen wie die Prozenteinstellung. Eine Grundmenge kann über eine entsprechende Einstellung des stufenlos regelbaren Antriebsmotores 34 gewählt werden, im gezeigten Beispiel für das Harz 1. Eine Kontrolle für die entsprechende Drehzahl wird über die Lichtschranke 36 durchgeführt und der Wert in der Steuerung angezeigt. Der prozentuale Anteil für den Härter 3 wird dann durch Wahl der Abgangsdrehzahl des Variatorgetriebes 41 eingestellt und ebenfalls über eine Lichtschranke 36 kontrolliert und in der Steuerung 40 angezeigt. In der Figur 2 werden die Einzelkomponenten direkt in den Innenraum des Druckzylinders 30 resp. 32 eingebracht. Dies kann über entsprechende Einfüll-Ventile 43 resp. 43' erfolgen. Z.Bsp. durch Bilden eines Vakuums in den Druckzylindern resp. durch Absenken der Verdrängerkolben 31 und 33. In der Figur 2 ist ferner ein zusätzlicher Druckkolben 49 dargestellt. Durch den Druckkolben 49 kann einerseits der ganze Antrieb wesentlich kleiner dimensioniert werden, da mit dem Druckkolben 49 in jeder beliebigen Position der Verdrängerkolben 31 und 33, der je erforderliche Druck erzeugbar ist. Der Druckkolben 49 erlaubt ferner ein schrittweises Nachstellen der Verdrängerkolben 31 und 33 gegebenenfalls in drucklosem Zustand. Sowohl der Druck wie die Dosiermenge bzw. Schussmenge und gegebenenfalls die Schusszeit sind exakt einstellbar. Die in der Figur 2 und 3 gezeigte Ausgestaltung ist auch insofern ganz besonders vorteilhaft, als der gesamte Antrieb mit Motor und Getriebe auf einer gemeinsamen Grundplatte 49 montiert ist, auf beidseits, links und rechts auch die beiden Zylinder 30, 32 aufgebaut sind. Bevorzugt wird der ganze Antriebsteil nicht wie in den Figuren 2 und 3 dargestellt ist in stehender Lage abgestützt, sondern umgekehrt hängend von unten her an die Grundplatte 49 montiert. Dies vereinfacht die ganze Stützkonstruktion, da die vertikalen Aktions- und Reaktionskräfte des Spindelgetriebes 38 sowie der Zylinder 30, 32 am kleinsten Ort über die Grundplatte 49 geschlossen werden können. Mit der Benutzung eines Motores mit zwei Abtriebswellen gilt das gleiche auch für horizontale Kräfte der beiden Spindelgetriebe 38. Die ganze Anlage kann auch mit der Verwendung von dem rein mechanischen Übertrieb relativ leicht gebaut werden. Die Lösung eignet sich deshalb vortrefflich, als Kleinanlage für die Herstellung von Einzelteilen z.Bsp. Probeteilen, besonders auch für den gewerblichen Einsatz. Es kann mit Kleinmengen gearbeitet und mit kleinen oder sehr wenig Reinigungsarbeiten schnell ein Produktwechsel durchgeführt werden. Die neue Lösung füllt deshalb eine Lücke, in den eingangs erwähnten Fachgebieten. Für die Automatisierung kann ein beliebiger Grad gewählt werden, durch das Hinzufügen von verschiedenen Optionen bis hin zur lernfähigen Elektronik.

In der Figur 3 ist die Kleinvergussanlage der Figur 2 in grösserem Massstab dargestellt. Beide Druckzylinder 30, 32 haben je einen aufsetzbaren Abschlussdeckel 44, welche über mehrere Zugstangen 45 sowie Klemmschrauben 46 über Dichtungen luftdicht auf dem jeweiligen Druckzylinder aufsetzbar bzw. davon wegnehmbar sind. Der Abschlussdeckel 44 hat mehrere Funktionen. Er erleichtert durch rasches Aufsetzen und Wegnehmen das Reinigen des Druckzylinders. Über einen Komponentenanschluss 47 wird die entsprechende Komponentenleitung 8 resp. 10 an einen Mischkopf 50 unter Druck zugeführt.

In Figur 2a ist der Spritzkopf bei einem Reinigungszyklus dargestellt. Hierbei werden nicht nur die vereinigten Reste der Komponenten ausgetragen sondern das gesamte Ventil einschliesslich Schlauchleitung und Mischkopf gründlich gereinigt, so dass jegliche Rückstände von Komponenten der vorangehenden Mischkomponente vollständig entfernt sind. Die ganze Anlage kann entweder längere Zeit ausser Betrieb gesetzt werden oder ist sofort für eine neue Mischung benutzbar. Dazu wurden die Verbindungsleitungen bzw. -schläuche umgesteckt von den jeweiligen Komponentenanschlüssen an die Spülmittelanschlüsse` was besonders erleichtert wird durch Verwendung bzw. Umstecken von Schnellverschluss-Schlauchkupplungen 87 sowie einem Kugelhahn 88.

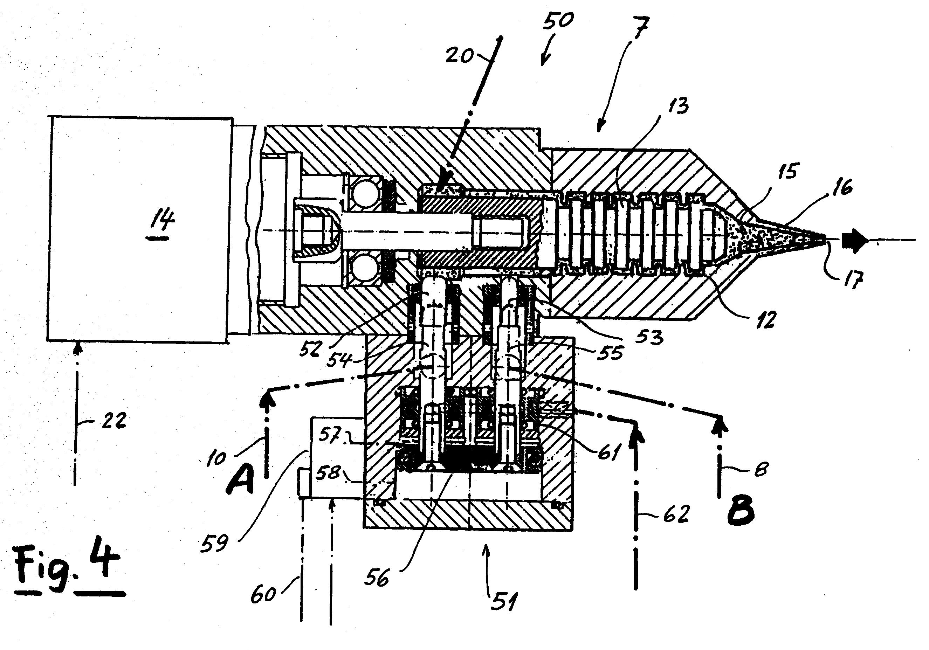

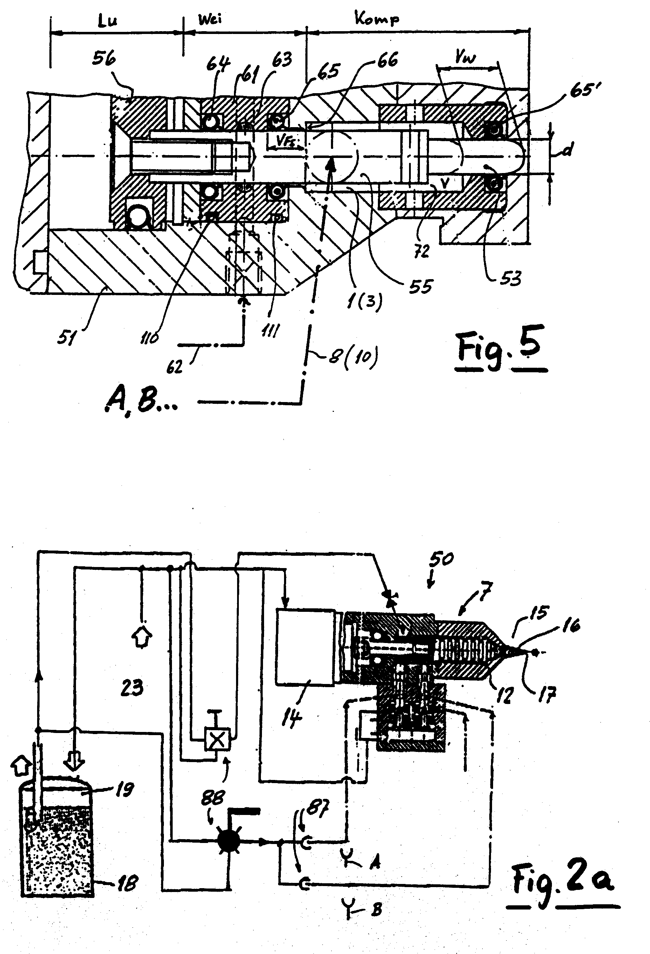

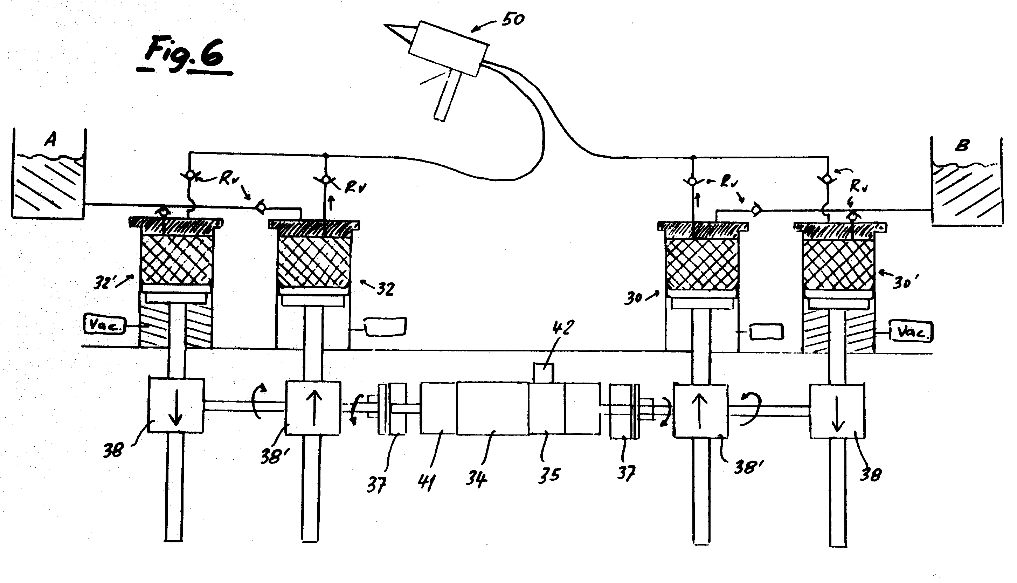

Ein Mischkopf 50 ist in der Figur 4 in grösserem Massstab dargestellt. Der Mischkopf 50 besteht im wesentlichen aus dem Mischer 7, einer Antriebszelle 14 sowie einer Ventilgruppe 51, welche zwei Nadelventile 52 und 53 aufweist. Ventilstössel 54 und 55 sind mit einer gemeinsamen Treiberplatte 56 verbunden. Die Treiberplatte 56 ist als Pneumatikkolben ausgebildet. Mittels eines Umsteuerventiles 59 und über eine Steuerleitung 60 kann entweder Druckluft über den Anschluss 57 zum Öffnen oder über den Anschluss 58 zum Schliessen beider Ventile eingelassen werden. Die Ventilgruppe 51 weist ferner zwischen den Nadelventilen 52/53 und der Treiberplatte 56 einen Weichmachereinbau 61 mit einem Anschluss 62 für Weichmacher auf. Ein einzelnes Ventil ist in der Figur 5 in noch grösserem Massstab dargestellt. Der Anschluss 62 für den Weichmacher ist direkt mit einer Ringleitung 63 verbunden, so dass der Treiberkolben bei jeder Öffnungs- und Schliessbewegung der Nadelventile 52/53 um den Ventilweg Vw in der Ringleitung bzw. Weichmacherringkammer 63 bewegt wird. Beidseits der Weichmacherringkammer 63 ist je ein Dichtring 64 resp. 65, 110/111 (Figur 5) angeordnet so dass der Weichmacher nicht austreten kann. Die Dichtung 65 ist als Lippendichtung ausgebildet und dient als eigentliche Drucksperre für die Komponenten. Das gleiche gilt für die Dichtung 65' am Ventilaustritt. Bevorzugt wird ein Weichmacher gewählt, der gute Schmierwirkung hat und den stabilen Aufbau eines Oelfilmes gewährleistet (z.Bsp. Mesamoll). Der Überdeckungsweg VFS des Ventilstössels 55 innerhalb des Weichmachereinbaues 61 ist etwas kürzer als der Verschiebeweg Vw, so dass ein ständiger Schmierfilm auf dem Treiberkolben erhalten bleibt. Damit kann kein Kunststoffmaterial der Komponenten 1 oder 3 durch ein Passpiel 66 nach rückwärts fliessen. Auf diese Weise aber nicht nur ein Rückfluss der Komponenten verhindert werden, sondern es wird auch eine völlige Trennung zwischen den drei Abschnitten Luft(Lu)/Weichmacher(Wei)/Komponenten(Komp) garantiert. Die Kunststoff-Komponenten können gar nicht mehr mit der Luft in Kontakt treten. Besonders für das Giessen von Teilen mit sehr kleinem Gewicht ist es von Vorteil, wenn der Durchmesser "d" des Nadelventiles möglichst klein ist oder z.Bsp. über auswechselbare Blenden verkleinert werden kann, damit ein optimales Fliessverhalten der Komponenten trotzdem gewährleistet bleibt. Der Ventilstössel 54, 55 bewegt sich um den Hubweg Vw (Figur 5). Öffnet sich das Nadelventil 52/53 so wird gleichzeitig das freie Volumen V in der Kammer 72 des Ventiles entlastet. Der Öffnungsweg ist für viele Fälle nicht kritisch, da über die Mengensteuerung eine Kompensation z.Bsp. durch geeignete Steuerung ohne weiteres möglich ist. Während des Schliessweges des Nadelventiles 52/53 geschieht das umgekehrte. Der Ventilstössel 54, 55 verdrängt eine entsprechende Menge der Komponente.

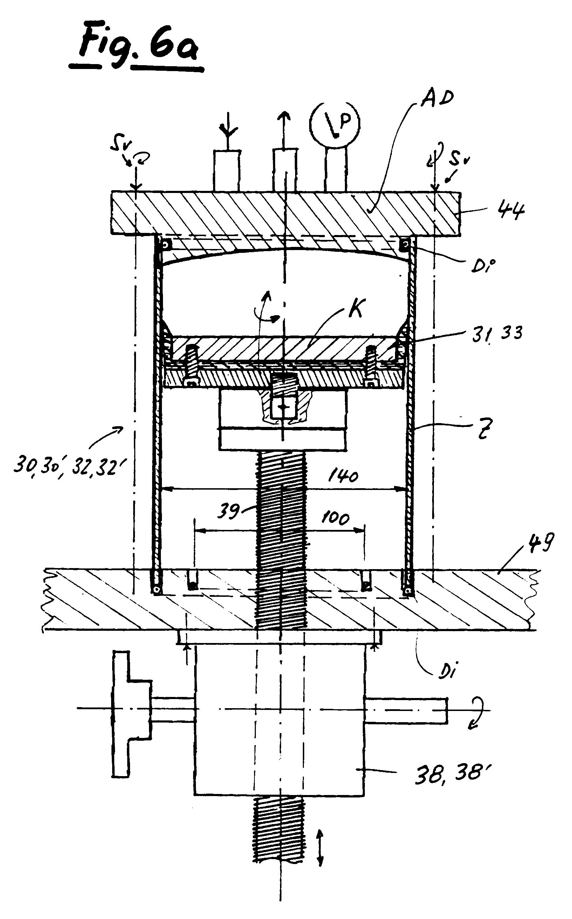

Die Figur 6 zeigt eine Lösung, bei der die beiden Druckzylinder 30, 32 doppelt ausgeführt sind durch Druckzylinder 30', 32'. Diese Lösung erlaubt das Füllen je eines der beiden Druckzylinder in der Zeit, während der jeweils andere für den Giessvorgang im Arbeitseinsatz ist. Als einfachste Lösung wird dazu die dargestellten Verbindungen mittels Rückschlagventile Rv, sowie je eines Umkehrgetriebes 38' das den Drehsinn für den zweiten Druckzylinder umkehrt verwendet. Während der eine Kolben nach oben fährt, bewegt sich der zweite exakt in alternierendem Sinne in die umgekehrte Richtung. Selbstverständlich kann auch hierzu irgend eine andere Antriebslösung z.Bsp. mit zwei oder vier Servomotoren gewählt werden. Wichtig ist auch hier die exakte Beherrschung der Wegfunktion über der Zeit. Die Figur 6a zeigt eine bevorzugte Ausgestaltung in Bezug auf die Kolben- und Zylinderdichtung sowie die Hauptelemente der Komponentenbehälter, welche für die Reinigung leicht wegnehmbar sind. Es wird ein Schnellverschluss Sv gelöst, der Abschlussdeckel AD und das Zylinderrohr Z abgehoben und als letztes der Kolbenkopf K als ganzes abgeschraubt. Der ganze Vorgang geht sehr schnell z.Bsp. in weniger als einer Minute. Mit der Zahl 100 resp. 140 und dem entsprechenden Durchmesserzeichen kann wahlweise ein entsprechend grosser Komponentenbehälter eingesetzt werden. Der Wechselvorgang geht sehr schnell z.Bsp. in weniger als einer Minute. Mit der Zahl 100 resp. 140 und den entsprechenden Durchmesserzeichen ist ein grosser Zylinder oder ein kleiner Zylinder mit entsprechendem Kolbenkopf sowie Abschlussdeckel angedeutet. Mit Vac ist in der Figur 6 angedeutet, dass die der jeweiligen Komponente abgekehrte Seite des Kolbens vorzugsweise an einer Volumenquelle angeschlossen wird, damit der Komponentenansaug optimaler ist und keine luft auf die Komponentenseite dringt.

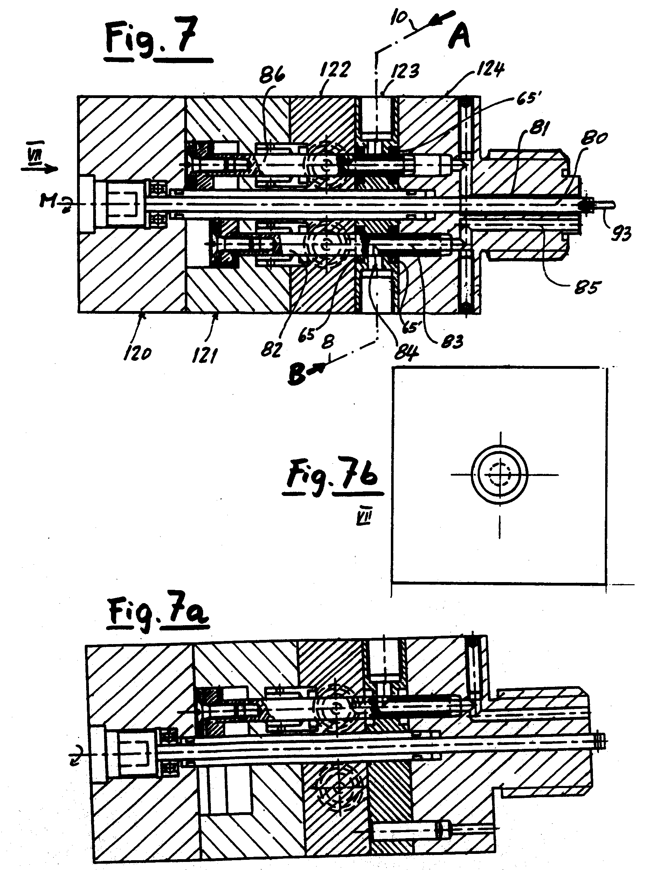

Die Figur 7 zeigt einen weiteren besonders vorteilhaften Spritzkopf. Die Öffnung und Schliessung erfolgt mittels den bewegbaren Ventilstösseln. Der Strömungsweg geht aber innen durch den Ventilstössel selbst. Dies hat zwei entscheidende Vorteile. Erstens ist der Totraum innerhalb des Ventiles nur minimal. Zweitens erfolgt die Schliessung des Ventilöffnungs- bzw. Schliessweges gegenüber den Figuren 4 und 5 gerade in umgekehrter Richtung. Dies hat zur Folge, dass gleichzeitig mit der Schliessbewegung eine kleine Rücksaugwirkung für die Einzelkomponenten entsteht und jegliches Nachtropfen aus der Ausgussdüse 17 verhindert wird. Ein weiterer Vorteil gemäss der Lösung von Figur 7 ist der Anschluss eines Mischkopfes über ein Aussengewinde, oder einen entsprechenden Bajonettverschluss, welcher weniger gefährdet ist, in Bezug auf Ansetzen der Kunststoff-Komponenten. Gemäss der Figur 7 ist die Antriebsachse 80 für den Antrieb des MischwerkzeugeS 93 durch den ganzen Ventilkopf hindurchgeführt. Für die Komponente A ist das letzte Teilstück des Zuführkanales 81, konzentrisch um die Antriebsachse geführt so dass im besonders gefährdeten letzten Teilstück die Antriebsachse 80 resp. die Dichtungen vor der allenfalls aggressiven Komponente B geschützt werden. Der Ventilstössel 82 ist in einer geöffneten Position gezeigt. Der Durchströmkanal 83 in dem Ventilstössel 82 angeordnet. Der Eingang liegt direkt über einer Bohrung 84 und gibt den Weg frei für die Komponente B von der Verbindungsleitung 8 zu dem Einlasskanal 85 und in die Mischkammer. Der Ventilstössel 86 ist in der vollständig zurückgezogenen bzw. geschlossenen Stellung dargestellt. Die Ventilbetätigung der Lösung gemäss Figur 6 wie Figur 7 kann identisch ausgeführt sein, wie zu Figur 4 beschrieben ist. Die Figuren 7, 7a und 7b zeigen noch einen weiteren sehr interessanten Ausgestaltungsgedanken, indem der ganze Ventilkopf aus mehreren quaderförmigen Blöcken aufgebaut und verschraubt ist. Es sind dies ein Antriebsblock 120, ein Ventilbetätigungsblock 121, ein Spülmittelblock 122, ein Komponentenblock 123 sowie ein Mischeranschlussblock 124. Die Blockbauweise erlaubt nicht nur eine wesentlich vereinfachte Herstellung sondern auch eine laufende Weiterentwicklung einzelner Blöcke zum Beispiel im Hinblick auf ganz neue Produkteigenschaften der Komponenten.

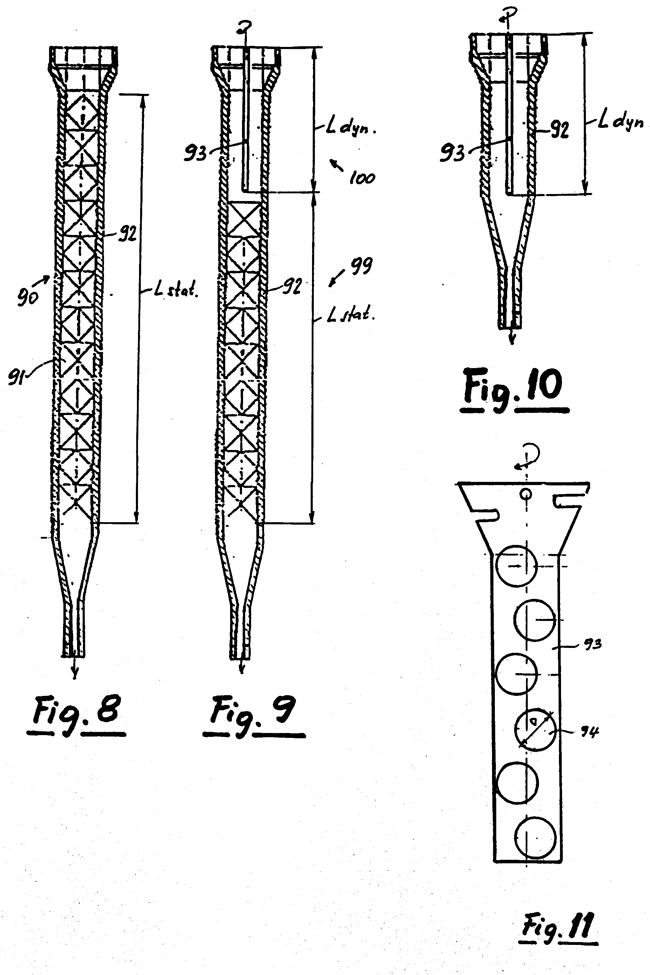

Die Figur 8 zeigt einen bekannten statischen Vorsatzmischer 90. Der statische Mischer weist anstelle eines bewegten hochtourigen Mischrotores 13 nur eine grosse Anzahl Strömungslenkkörper 91 auf. Durch entsprechend verzögerte und beschleunigte Bewegungen des Mischgutes werden die Komponenten ohne bewegte Teile vermischt. Der statische Vorsatzmischer 90 weist ein charakteristisches, langes Mischrohr 92 mit einer statischen Mischlänge von L stat. auf. Der innere Durchmesser kann z.Bsp. 5 bis 15 mm betragen. Gemäss Figur 9 wird nun vorgeschlagen, eine erste Anzahl fester Strömungslenckörper 91 durch ein schnell drehendes Mischwerkzeug 93 zu ersetzen. Das Mischwerkzeug wird gemäss Figur 11 bevorzugt als Mischblatt 93 ausgebildet. Es kann aber jede andere Form auch aufweisen, die erlaubt in dem engen Querschnitt des Mischrohres 92 die Mischfunktion zu erfüllen. Das Mischblatt 93 weist eine Anzahl versetzt angeordneter Durchbrechungen 94 auf. Das Mischblatt ist bevorzugt formähnlich gestaltet wie das Mischrohr 92 in dem entsprechenden Abschnitt. Im Bereich einer Kupplung 95 (Figur 11) hat das Mischblatt eine Trapezform. Das Mischrohr 92 kann auch hier als Wegwerfkörper konzipiert sein, da das Reinigen des Inneren für einen Produktwechsel oder Produktionsunterbruch beinahe unmöglich ist, oder Übermengen an Spülmittel benötigen würde. Es hat sich nun gezeigt, dass durch das Voransetzen einer dynamischen Vormischung eine bisher bestehende Lücke für das Verarbeiten von z.Bsp. Epoxydharzen geschlossen werden kann. Je langsamer die Durchströmgeschwindigkeit durch den statischen Mischer 99 gewählt wird, um so wirkungsvoller arbeitet nämlich der dynamische Vormischer 100. Eine Durchströmgeschwindigkeit von z.Bsp. 5 cm/sec brachten noch sehr gute Resultate. Diese eignen sich ganz besonders für Kunststoffe mit langer Topfzeit von z.Bsp. 30 Minuten. Die Figur 10 zeigt eine weitere, ganz besonders vorteilhafte Ausgestaltung eines rein dynamischen Mischers. Durch die Verwendung eines flachen, blattförmigen Mischwerkzeuges 93 etwa gemäss Figur 11, kann damit erstmalig ein schnellreinigbarer Mischer für Mehrkomponenten-Kunststoff eingesetzt werden. Die Mischqualität entspricht einer Lösung gemäss Figur 4. Das Mischblatt wird nach Bedarf einfach mit einem Lappen abgewischt, was bisher nicht möglich war.

Durch Wahl einer geeigneten Grösse des Mischers 7 kann das innere Füllvolumen (Vorkammer-Mischkammer) von z.Bsp. 50 auf 10 Gramm oder noch tiefer bis unter 1 gr gehalten werden. Kleinste Teile verlangen eine Kunststoffmenge von weniger als 1 gr z.Bsp. von 0,3 gr wobei das Mischungsverhältnis 1:1 bis 100 : 1 betragen kann. Die Beherrschung der Gewichtsgenauigkeit, des Mischeffektes wird besonders auch durch die Ventilstösselbewegung stark beeinflusst, z.Bsp. unterstützt durch den rückstossfreien Ventilstössel.

## Patentansprüche

1. Vorrichtung zum dosierten Zuführen der Einzelkomponenten von flüssigen Mehrkomponenten-Kunststoffen mit weniger als 100 bar, über Verbindungsleitungen an einen, mit absperrbaren Ventilen ausgebildeten Mehrkomponentenspritzkopf, mit wenigstens zwei Komponentenbehältern mit einem Fassungsvermögen von 1 bis 5 Litern, aus denen mit Intervallen eine bestimmte Menge mit sehr hoher Präzision oder über eine bestimmte Zeit eine momentan konstante Menge dosierbar ist, wobei die zwei Komponentenbehälter selbst als aufrechte Druckzylinder und zur Haltung des Druckes auch bei verschlossenen Ventilen in den Komponentenbehältern mit von unten nach oben in den Komponentenbehältern bewegbare Verdrängerkolben und einem elektromechanischen Antriebssystem für die Verdrängerkolben als Kleinvergussanlage ausgebildet und die Förderleistung sowie das Verhältnis der zwei Komponenten über das elektromechanische Antriebssystem einstellbar sind.

2. Vorrichtung nach Anspruch 1,
**dadurch gekennzeichnet**,
dass sie zwei Komponentenbehälter für das gleichzeitige Dosieren aufweist und den zwei Verdrängerkolben ein elektromechanischer Antrieb vorzugsweise mit einem gemeinsamen Antriebsmotor und je zwischengeschalteten Reduktionsgetrieben für die Verdrängerkolben zugeordnet ist.

3. Vorrichtung nach Anspruch 2,
**dadurch gekennzeichnet**,
dass der gemeinsame Antriebsmotor Mittel zur stufenlosen Drehzahleinstellung aufweist, ein Reduktionsgetriebe als Variatorgetriebe, und der Antriebsmotor vorzugsweise mit doppelter Abtriebswelle ausgebildet ist.

4. Vorrichtung nach einem der Ansprüche 1 bis 3,
**dadurch gekennzeichnet**,
dass jedem der wenigstens zwei Komponentenbehälter je ein gleicher alternierend arbeitender Druckzylinder mit umgekehrter Bewegungsrichtung der Verdrängerkolben zugeordnet ist, insbesondere zur Verwendung für eine automatisierbare Befüllung der Zylinder mit den entsprechenden Komponenten.

5. Vorrichtung nach einem der Ansprüche 1 bis 4,
**dadurch gekennzeichnet**,
dass die Komponentenbehälter lösbare Abschlussdeckel aufweisen, wobei die Abschlussdeckel, die Druckzylinder und/oder die Kolben wegnehmbar ausgebildet sind, insbesondere zur Schnellreinigung aller Komponenten-Behälterteile.

6. Vorrichtung nach einem der Ansprüche 1 bis 5,
**dadurch gekennzeichnet**,
dass die Komponentenbehälter lösbare Anschlüsse für die Verbindungsleitungen aufweisen, wobei die Verbindungsleitungen wahlweise mit den lösbaren Anschlüssen für das Zuführen der Komponenten oder mit Reinigungsanschlüssen verbindbar sind zur Reinigung der Verbindungsleitungen und des Mischkopfes mittels Luft oder flüssigen Reinigungsmitteln insbesondere bei einem Produktewechsel.

7. Vorrichtung nach einem der Ansprüche 1 bis 6,
**dadurch gekennzeichnet**,
dass der Mischkopf Anschlussstellen für Reinigungsmittel aufweist, für die Reinigung der Komponentenventile sowie des Mehrkomponentenmischkopfes zwischen Arbeitszyklen.

8. Vorrichtung nach einem der Ansprüche 1 bis 7,
**dadurch gekennzeichnet**,
dass die Ventilabsperrungen mit je einer Drucksperre für die entsprechenden Komponenten ausgebildet sind, wobei die Ventilstössel vorzugsweise als Ventilgruppe und der Mischkopf besonders vorzugsweise statische oder dynamische Mischwerkzeuge aufweist.

9. Vorrichtung nach Anspruch 8,
**dadurch gekennzeichnet**,
dass die flüssigen Mehrkomponenten innen durch den vordersten Abschnitt der Ventilstössel hindurch geführt und die verschliessbare Ventilöffnung seitlich an den Ventilstösseln angebracht sind, derart, dass jeweils die vorgeschobene Stellung der Ventilstössel die offene Position und die rückwärtsgeschobene Stellung die gesperrte Position ist.

10. Vorrichtung nach einem der Ansprüche 1 bis 9,
**dadurch gekennzeichnet**,
dass die Ventilabsperrung kleinquerschnittig, vorzugsweise als Nadelventil ausgebildet und in dem Bereich der Mischkammerwandung bzw. an einer Vorkammer zur Mischkammer angeordnet und vorzugsweise um die Ventilstössel, zwischen der Treiberseite und der Absperrseite, eine Weichmacherkammer angeordnet ist, zur Aufbringung und Aufrechterhaltung eines Weichmacherfilmes auf den Ventilstösseln.

11. Vorrichtung nach einem der Ansprüche 1 bis 10,
**dadurch gekennzeichnet**,
dass der Mischer als statischer, dynamischer oder dynamisch-statischer Mischer ausgebildet ist und zur Schnellreinigung ein blattförmig ausgebildetes Mischwerkzeug aufweist und die Mischkammer gewinde- oder bajonettartig aufsetzbar und lösbar ist.

12. Vorrichtung nach Anspruch 11,
**daduch gekennzeichnet**,
dass der Mischer als dynamisch-statischer Mischer ausgebildet ist, der in einem ersten Abschnitt motorisch angetriebene Mischwerkzeuge aufweist, zur dynamischen Vormischung der Komponenten, wobei die Länge des Vormischers vorzugsweise wenigstens 10 bis 50 % des statischen Mischabschnittes beträgt, und die Mischwerkzeuge besonders vorzugsweise als hochtouriges Mischblatt und formähnlich wie der erste Abschnitt der Mischkammer ausgebildet ist und das Mischblatt ganz besonders vorzugsweise eine Anzahl Zirkulationsöffnungen und einen ersten konischen und einen anschliessenden parallelen Abschnitt aufweist.

## Claims

1. Device for the metered feed of the individual components of fluid multi-component plastics at less than 100 bar via connecting pipes to a multi-component extrusion die designed with valves which are capable of being shut off, with at least two component containers with a capacity of 1 to 5 litres from which a specific quantity can be metered with very high precision at intervals or an instantaneously constant quantity can be metered over a specific period of time, wherein the two component containers themselves are designed as vertical pressure cylinders and, for maintaining the pressure even with closed valves in the component containers with displacement pistons capable of moving upwards in the component containers and an electromechanical drive system for the displacement pistons are designed as a small-scale casting unit and the conveying capacity as well as the ratio of the two components are adjustable via the electromechanical drive system.

2. Device according to claim 1, characterized in that it comprises two component containers for simultaneous metering and the two displacement pistons are allocated an electromechanical drive preferably with a common driving motor and interposed reduction gears for the displacement pistons.

3. Device according to claim 2, characterized in that the common driving motor comprises means for smooth speed adjustment, a reduction gear as variable speed gear, and the driving motor is preferably designed with a double output shaft.

4. Device according to one of claims 1 to 3, characterized in that each of the at least two component containers is allocated an identical alternating pressure cylinder with a reverse direction of movement to the displacement pistons, in particular for use for automatable filling of the cylinders with the corresponding components.

5. Device according to one of claims 1 to 4, characterized in that the component containers have detachable covers, the covers, the pressure cylinders and/or the pistons being removable in design, in particular for the rapid cleaning of all component container parts.

6. Device according to one of claims 1 to 5, characterized in that the component containers comprise detachable fittings for the connecting pipes, the connecting pipes being connectable selectively to the detachable fittings for feeding the components or to cleaning fittings for cleaning the connecting pipes and the mixing head using air or liquid cleaning agents, in particular during a change of product.

7. Device according to one of claims 1 to 6, characterized in that the mixing head comprises fitting points for cleaning agents, for cleaning the component valves and the multi-component mixing head between operating cycles.

8. Device according to one of claims 1 to 7, characterized in that the valve shut-off means are designed with a respective pressure barrier for the corresponding components, the valve plungers preferably ... as valve unit, and the mixing head particularly preferably comprising static or dynamic mixing tools.

9. Device according to claim 8, characterized in that the liquid multi-components are guided internally through the foremost portion of the valve plungers and the closable valve orifice is mounted laterally on the valve plungers in such a way that the advanced position of the valve plungers is the open position and the pushed-back position is the blocked position.

10. Device according to one of claims 1 to 9, characterized in that the valve shut-off is designed with a small cross section, preferably as a needle valve, and a plasticizer chamber is arranged in the region of the mixing chamber wall or on a preliminary chamber to the mixing chamber and preferably round the valve plungers, between the driver side and the shut-off side, for application and maintenance of a plasticizer film on the valve plungers.

11. Device according to one of claims 1 to 10, characterized in that the mixer is designed as a static, dynamic or dynamic-static mixer and, for rapid cleaning, comprises a leaf-shaped mixing tool and the mixing chamber can be applied and detached in the manner of a screw thread or bayonet fitting.

12. Device according to claim 11, characterized in that the mixer is designed as a dynamic-static mixer which comprises motor-driven mixing tools in a first portion for the dynamic premixing of the components, the length of the premixer preferably being at least 10 to 50% of the static mixing portion and the mixing tools particularly preferably being designed as a high-speed mixing blade similar in shape to the first portion of the mixing chamber and the mixing blade particularly preferably comprising a number of circulation orifices and a first conical and a subsequent parallel portion.

## Revendications

1. Dispositif pour acheminer de façon dosée des constituants individuels de plastiques liquides à plusieurs constituants avec une pression inférieure à 100 bars, par des conduites de connexion, à une tête d'injection à plusieurs constituants réalisée avec des soupapes obturables, avec au moins deux réservoirs à constituants d'une capacité de 1 à 5 litres, à partir desquels on peut doser une certaine quantité avec une très grande précision par intervalles ou une quantité momentanément constante pendant un certain temps, les deux réservoirs à constituants étant réalisés eux-mêmes comme des cylindres de pression verticaux et pour maintenir la pression, même avec des soupapes fermées, dans les réservoirs à constituants avec des pistons déplaceurs mobiles du bas vers le haut dans les réservoirs à constituants et un système d'entraînement électromécanique pour les pistons déplaceurs comme petit appareil de remplissage, et la capacité de rendement ainsi que le rapport des deux constituants étant réglables par le système d'entraînement électromécanique.

2. Dispositif selon la revendication 1, caractérisé en ce qu'il présente deux récipients à constituants pour le dosage simultané et qu'un entraînement électromécanique de préférence avec un moteur d'entraînement commun et des engrenages réducteurs respectivement intercalés pour les pistons déplaceurs sont attribués aux deux pistons déplaceurs.

3. Dispositif selon la revendication 2, caractérisé en ce que le moteur d'entraînement commun présente des moyens pour le réglage progressif du régime, un engrenage réducteur en tant qu'engrenage à vitesse variable et le moteur d'entraînement est réalisé de préférence avec un double arbre de sortie.

4. Dispositif selon l'une quelconque des revendications 1 à 3, caractérisé en ce que respectivement un cylindre de pression identique travaillant en alternance avec sens de mouvement inversé des pistons déplaceurs est attribué à chacun des au moins deux réservoirs à constituants, en particulier pour l'utilisation pour le remplissage automatisable des cylindres avec les constituants correspondants.

5. Dispositif selon l'une quelconque des revendications 1 à 4, caractérisé en ce que les réservoirs à constituants ont des couvercles de fermeture amovibles, les couvercles de fermeture, les cylindres de pression et/ou les pistons étant réalisés de façon amovible, en particulier pour le nettoyage rapide de toutes les pièces des réservoirs à constituants.

6. Dispositif selon l'une quelconque des revendications 1 à 5, caractérisé en ce que les réservoirs à constituants ont des raccordements détachables pour les conduites de connexion, les conduites de connexion pouvant être reliées au choix avec les raccords détachables pour l'arrivée des constituants ou avec des raccords pour nettoyage, pour le nettoyage des conduites de connexion et de la tête mélangeuse au moyen d'air ou de nettoyants liquides, en particulier lors d'un changement de produit.

7. Dispositif selon l'une quelconque des revendications 1 à 6, caractérisé en ce que la tête mélangeuse présente des points de raccordement pour l'agent de nettoyage, pour le nettoyage des soupapes à constituants et de la tête mélangeuse à plusieurs constituants entre les cycles de travail.

8. Dispositif selon l'une quelconque des revendications 1 à 7, caractérisé en ce que les obturations de soupapes sont réalisées avec un blocage de pression pour les constituants correspondants, les poussoirs de soupapes étant réalisés de préférence sous la forme de groupe de soupapes et la tête mélangeuse présentant en particulier de préférence des outils de mélange statiques ou dynamiques.

9. Dispositif selon la revendication 8, caractérisé en ce que les multiples constituants liquides sont guidés à l'intérieur à travers la partie la plus avancée des poussoirs de soupapes et les ouvertures de soupapes obturables sont disposées sur le côté des poussoirs, de telle façon que respectivement la position avancée des poussoirs est la position ouverte et la position reculée la position fermée.

10. Dispositif selon l'une quelconque des revendications 1 à 9, caractérisé en ce que l'obturation de soupape est conçue avec une petite section, de préférence comme une soupape à pointeau et est disposée dans la zone de la paroi de la chambre de mélange ou sur une pré-chambre de la chambre de mélange et une chambre à plastifiant est disposée de préférence autour des poussoirs de soupape, entre le côté entraîneur et le côté obturation, pour l'application et le maintien d'un film de plastifiant sur les poussoirs de soupape.

11. Dispositif selon l'une quelconque des revendications 1 à 10, caractérisé en ce que le mélangeur est conçu comme un mélangeur statique, dynamique ou dyamique-statique et présente un outil de mélange conçu en forme de lame pour le nettoyage rapide et la chambre de mélange peut être posée et enlevée comme un filetage ou une baïonnette.

12. Dispositif selon la revendication 11, caractérisé en ce que le mélangeur est conçu comme un mélangeur dynamique-statique, qui présente des outils de mélange entraînés par moteur dans une première partie, pour le pré-mélange dynamique des constituants, la longueur du pré-mélangeur représentant de préférence au moins 10 à 50% de la partie de mélange statique, et les outils de mélange étant réalisés en particulier de préférence sous la forme d'une lame de mélange à régime élevé et avec la même forme que la première partie de la chambre de mélange et la lame de mélange présentant tout particulièrement de préférence un certain nombre d'orifices de circulation et une première partie conique et une partie consécutive parallèle.
